# EUROPEAN PATENT APPLICATION

(11) **EP 4 467 289 A1**
(43) Date of publication of application: **27.11.2024**
(21) Application number: 24170406.3
(22) Date of filing: 16.04.2024
(51) Int. Cl.: B25B 21/00, B25B 23/147

(54) **SYSTEM COMPRISING A TIGHTENING TOOL**

(30) Priority: 26.05.2023 SE 2330239
(71) Applicant: Atlas Copco Industrial Technique AB, 105 23 Stockholm (SE)
(72) Inventor: Nikolov, Nico, 46325 Borken (DE)
(74) Representative: Atlas Copco Industrial Technique AB

(57) **Abstract**

A system (1) is provided comprising a tightening tool (2); a distance measuring device (3a) arranged at the tightening tool to sense a distance (D₁) to a surface (10) of a work piece (12) in front of the tightening tool; and a control device (4) configured to control the tightening tool to be in a default disabled state, in which the tightening tool is prevented from performing tightening operations; and, in response to the sensed distance being comprised within a predetermined range, enable the tightening tool to perform a tightening operation. Hence, it may only be possible to start a tightening operation if the tool is positioned in front of the joint with a fastener of a correct length abutting the joint/processing point. If the fastener is longer/shorter than admitted the tool will remain disabled.

## Description

### Field of the invention

The present invention generally relates to the field of systems comprising tightening tools for industrial assembly.

### Background of the invention

Tightening tools are used in industrial assembly to apply threaded fasteners such as screws/bolts to assemble different work pieces, such as parts of products. The tightening tools may be operated manually by human operators or by robots. It is important that the operator/robot selects a fastener having a length which is correct according to the designated work instruction. Otherwise, the work piece may be damaged if applying a fastener that is too long, or the joint quality may be deteriorated if the fastener is too short. Hence, it is of high importance that a fastener of the correct length is applied.

SE545131C2 shows a tightening tool that can determine the length of a fastener by means of an ultrasonic sensor and, if the determined length is incorrect, the motor of the tool is disabled. However, such ultrasonic sensors are expensive and may be difficult to implement in tightening tools. For example, the alignment between the head of the fastener and the ultrasonic sensor required to make an accurate measurement may be difficult to achieve.

### Summary of the invention

It would be advantageous to achieve a system overcoming, or at least alleviating, the above mentioned drawbacks. In particular, it would be desirable to enable a system that can reduce the risk of application of fasteners of incorrect length. It would also be desirable to enable such a system which is less expensive and easier to implement.

To better address one or more of these concerns, a system having the features defined in the independent claim is provided. Preferable embodiments are defined in the dependent claims.

Hence, according to an aspect, a system is provided. The system comprises a tightening tool; a distance measuring device arranged at the tightening tool to sense a distance to a surface of a work piece in front of the tightening tool; and a control device. The control device is configured to: control the tightening tool to be in a default disabled state, in which the tightening tool is prevented from performing tightening operations; and, in response to the sensed distance being comprised within a predetermined range, enable the tightening tool to perform a tightening operation.

The inventor has realized that the distance from the tool to the surface of the work piece in front of the tool can be measured in order to estimate the length of the fastener. This enables using distance sensors based on light and/or radio signals, such as LiDAR or RADAR sensors, which are typically less expensive and easier to implement in a tool than ultrasonic sensors. Further, a challenge with estimating the fastener length by measuring the distance to the work piece is to know at which moment in time to measure the distance. The present invention solves this by controlling the tool to be disabled by default and only enable the tool when the measured distance is within a predetermined allowed range. This enables a system where it e.g. is possible to start a tightening operation if the tool is positioned in front of the joint with a fastener of a correct length abutting the joint/processing point, whereas if the fastener is longer than admitted, the allowable predetermined distance range will be exceeded and the tool will remain disabled. If the fastener is shorter than admitted, the sensed distance to the surface in front of the tool will be shorter than the allowable predetermined distance range and the tool will remain disabled.

The distance measuring device may monitor the distance to a surface in front of the tool. This may e.g. be made continuously as long as the tool is on, or at least as long as the tool is within a predetermined distance to the joint (which e.g. may be determined by a position determining device as will be described in more detail further below).

According to an embodiment, the predetermined range may include a distance that is sensed (by the distance measuring device) in case the tightening tool has a fastener of a correct length according to a work specification arranged in its socket and the tightening tool is held in a starting position for performing a tightening operation with a distal end of the fastener in abutment with a processing point of the work piece. Hence, the predetermined distance may be pre-set so as to only allow starting a tightening operation when a fastener of a correct length according to a work specification is held against the processing point of the joint. A longer or shorter fastener will result in a sensed distance falling outside the predetermined range and the tool will remain disabled.

The size of the predetermined distance range may of course vary in different applications. For example, the predetermined distance range may be set so as to allow distances corresponding to one or a few millimetres from the correct screw length according to the work specification.

In the present specification, the term "processing point" means the position of a joint to be/being processed by the tightening tool. This may e.g. be a threaded hole in the work piece, in which the fastener is to be applied.

According to an embodiment, the distance measuring device may comprise at least one sensor arranged to use light and/or radio signals that are reflected against the surface (of the work piece) for sensing the distance, such as at least one LiDAR and/or RADAR sensor. The sensor may be configured to send a light signal and/or a radio signal and receive a reflection of the signal against the surface in front of the tool. The received reflection may then be analysed in order to determine the distance. For example, a time of flight of the signal may be determined and based on that, the distance may be calculated. The present embodiment is advantageous in that such types of sensors are relatively cheap and easy to implement in a tightening tool.

According to an embodiment, the control device may be further configured to control the tightening tool to perform tightening operations at a plurality of processing points on the work piece. The processing points may e.g. correspond to joints of an assembly.

According to an embodiment, the system may further comprise a position determining device configured to determine a position of the tightening tool relative to (each one of) the plurality of processing points. The position determining device may e.g. comprise a camera on the tool for determining the position of the tool relative to the work piece based on image recognition, and/or one or more cameras in the roof for detecting a position of a marker on the tool.

According to an embodiment, each one of the processing points may be associated with a specific predetermined distance range (according to a work specification), within which the tightening tool is enabled by the control device to perform a tightening operation. Hence, different processing points may be associated with different allowed distance ranges, which enables a system that can handle different faster lengths for different processing points.

In practice, this may be executed by the control device by associating a specific predetermined distance range with a specific position of the tool (as determined by the position determining device and corresponding to a specific processing point).

According to an embodiment, the distance measuring device may be arranged to sense a distance to a portion of the surface in front of the tightening tool, which portion, when the tightening tool is held in a starting position for performing a tightening operation at a processing point on the work piece, is located in the vicinity of a processing point, such as within 50 mm from the processing point, such as within 30 mm from the processing point. For example, the distance measuring device may be arranged at the tool head aiming its' sensor in a forward direction of the tool.

According to an embodiment, the distance measuring device may comprise several sensors (for sensing a distance to the surface of the work piece in front of the tool) arranged around a circumference of a tool head of the tightening tool, which may increase the accuracy of the estimation of the length of the fastener, in particular if the surface around the processing point is uneven.

According to an embodiment, the system may further comprise an orientation sensing device arranged to sense an orientation of the tool, wherein data from the orientation sensing device is used as a further basis by the control device for determining whether to enable the tightening tool to perform a tightening operation. For example, the predetermined distance range may depend on the orientation of the tool. This may in particular be advantageous if the surface around the processing point is uneven. It may also be used for adjusting the predetermined distance in case the tool is slightly tilted with respect to the central axis of the fastener.

It is noted that embodiments of the invention relates to all possible combinations of features recited in the claims.

### Brief description of the drawings

This and other aspects will now be described in more detail in the following illustrative and non-limiting detailed description of embodiments, with reference to the appended drawings.
Figure 1 shows a system according to an embodiment.
Figure 2 shows a system according to another embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

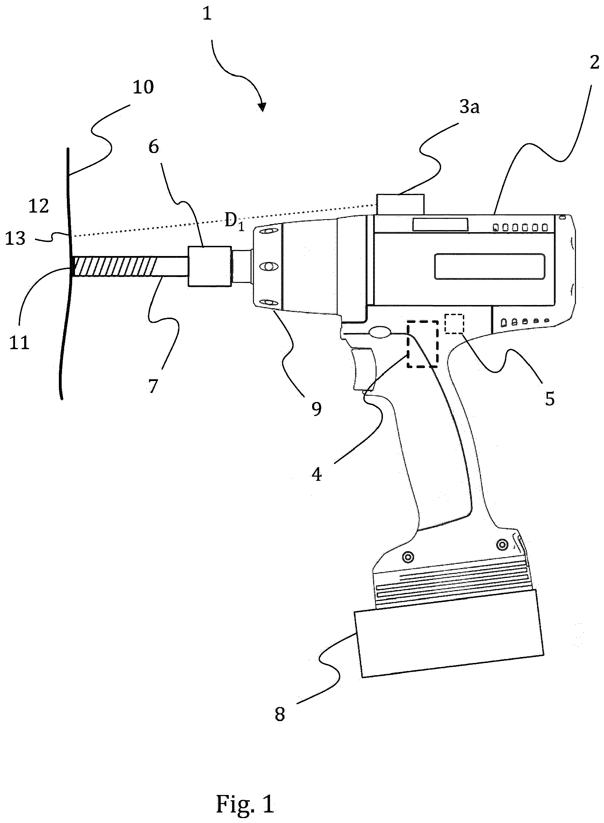

A system 1 according to an embodiment will be described with reference to Figure 1. The system 1 comprises a tightening tool 2 for applying threaded fasteners 7 to a work piece 12 in an industrial assembly process. The portion of the work piece 12 at which the fastener 7 is applied may be referred to as a processing point 11. This may e.g. be a threaded hole in which the fastener 7 is to be applied. One work piece 12 may comprise several processing points 11.

The tightening tool 2 may be of a conventional type and may comprise standard components, such as a motor, transmission and a battery 8. The tightening tool 2 may be provided with a socket 6 for holding/turning the fastener 7. The tightening tool 2 may be operable e.g. by a human operator or a robot.

The system 1 further comprises a control device 4 for controlling the tool 2 to perform tightening operations. The control device 4 may be comprised in the tool 2 (as illustrated in Figure 1) or may be external to the tool 2 (not shown). In the latter case, the control device 4 may be arranged to communicate with the tool 2. The control device 4 may be a single unit or distributed in several units (such as cloud based). The control device 4 may comprise processing circuitry and a memory.

The system 4 further comprises a distance measuring device 3a arranged at the tool 2 to measure a distance D₁ to a surface 10 of the work piece 12 in front of the tool 2. For example, the distance measuring device 3a may be attached on the tool 2 (optionally as an accessory) or incorporated therein. The distance measuring device 3a may e.g. comprise a LiDAR sensor and/or a RADAR sensor and/or any other type of sensor that utilizes a light or radio signal that is transmitted so as to be reflected against the surface 10. The distance measuring device 3a may e.g. determine the distance D₁ between the sensor and the surface 10 in front of the tool 2 by analyzing the time of flight of the signal.

The distance measuring device 3a may be arranged on/in the tool 2 so as to measure a distance D₁ to a portion 13 of the surface 10 located near the processing point 11, such as to a portion/point 13 located within 50 mm, such as within 30 mm, or even within 10 mm from the processing point 11.

The distance measuring device 3a may e.g. be configured to continuously measure the distance as long as the tool 2 is on, or at least as long as the tool 2 is within a predetermined distance from the work piece 12/processing point 11, or as long as the tool 2 is set in a distance measuring mode.

The system 1 may further comprise an orientation sensing device 5, which e.g. may comprise one or more accelerometers and/or one or more gyros. The orientation sensing device 5 may be arranged to sense the orientation in which the tool 2 is held.

The system 1 may further comprise a position determining device (not shown). The position determining device may be configured to determine a position of the tool 2 in relation to the work piece 12. For example, the position determining device may be able sense when the tool 2 is positioned at a specific processing point 11 (out of several) of the work piece 12. The position determining device may be of any conventional type, such as a camera based or UWB based position determining device.

The control device 4 may be configured to control the tool 2 to be in a disabled state by default (when the tool 2 is on). In the disabled state, the tool 2 cannot start a tightening operation/programme. For example, even if an operator/robot pulls the trigger of the tool 2, the motor of the tool 2 will continue to stand still. The control device 4 may be configured to only enable the tool 2 to start a tightening operation if one or more criteria are met. One such criteria is that the distance D₁, as measured/sensed by the distance measuring device 3a, is comprised within a predetermined range. Preferably, that predetermined range is set such that the measured distance D₁ falls within it in case the tool 2 is held in a position for starting a tightening operation, with a fastener 7 of a correct length according to a work specification arranged in the socket 6 and with a distal end of the fastener 7 (i.e. the end of the fastener 7 that is to enter the threaded hole upon tightening) in abutment with the processing point 11 at the work piece 12. Such starting position of the tool 2 is illustrated in Figure 1.

When the tool 2 is in the enabled state, a tightening operation is allowed to start, such as by pulling the trigger of the tool 2.

This means that if the operator (or robot) has picked a fastener of incorrect length, the tool 2 will end up too close (in case the fastener is too short) or too far away (in case the fastener is too long) for the control device 4 to enable start of a tightening operation. In such case, the tool 2 will remain disabled, whereby it is prevented that a tightening operation is performed, or even started, with an incorrect fastener.

Optionally, a further criteria that has to be met for the control device 4 to enable the tool 2 may be that the tool 2 is at a certain position (as determined by the position determining device), such as at one of the processing points 11.

Further, different processing points 11 may be associated with different predetermine allowable distance ranges. At which processing point the tool 2 is at the moment may either be determined by means of the position determining device (whereby a certain position may be associated with a certain processing point), or by means of the control device 4 keeping track of the number of tightenings that has been performed in comparison with a predetermined order of the processing points to be processed. For example, if there are in total ten processing points to be processed, the first to fifth of them may be associated with one predetermined range while the sixth to tenth of them may be associated with another predetermined range.

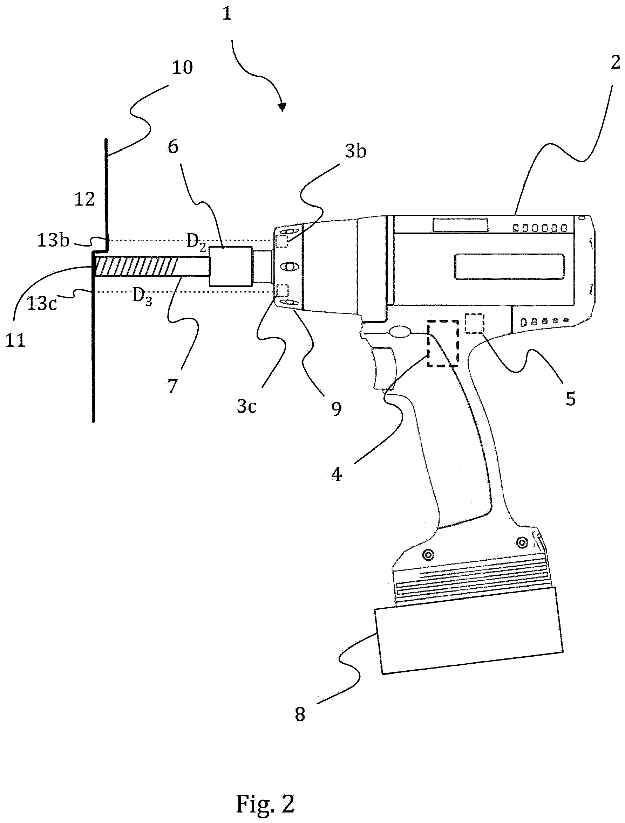

A system 1 according to another embodiment will be described with reference to Figure 2. The system 1 may be similarly configured as the system 1 described with reference to Figure 1, but with the difference that the distance measuring device comprises several sensors 3b, 3c arranged to sense the distance D₂, D₃ to different portions 13b, 13c of the work piece 12 in front of the tool 2. For example, the sensors 3a, 3b may be arranged circumferentially around the tool head 9 of the tool 2.

Further, the predetermined distance range may be dependent on the tool orientation as sensed by the orientation sensing device 5 (this may be applicable irrespective of the number of sensors comprised in the distance measuring device).

So, for example, if the surface 10 of the work piece 12 is uneven, as illustrated in Figure 2, it may be preset that the different distances, as measured by the different sensors 3a, 3b, shall be within different predetermined ranges. For example, the predetermined distance range for the upper sensor 3b may be shorter than the predetermined distance range set for the lower sensor 3c in case the orientation sensing device 5 indicates that the tool 2 is held in an upright position as illustrated in Figure 2. However, if the orientation sensing device 5 indicates that the tool 2 is held upside down, the allowable predetermined distance ranges for the two sensors 3b, 3c may be opposite.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. System (1) comprising:
a tightening tool (2);
a distance measuring device (3a, 3b, 3c) arranged at the tightening tool to sense a distance (D₁, D₂, D₃) to a surface (10) of a work piece (12) in front of the tightening tool; and
a control device (4) configured to:
- control the tightening tool to be in a default disabled state, in which the tightening tool is prevented from performing tightening operations; and
- in response to the sensed distance being comprised within a predetermined range, enable the tightening tool to perform a tightening operation.

2. The system as defined in claim 1, wherein the predetermined range includes a distance that is sensed in case the tightening tool has a fastener of a correct length according to a work specification arranged in its socket and the tightening tool is held in a starting position for performing a tightening operation with a distal end of the fastener in abutment with a processing point (11) of the work piece.

3. The system as defined in claim 1 or 2, wherein the distance measuring device comprises at least one sensor arranged to use light and/or radio signals that are reflected against the surface for sensing the distance, such as at least one LiDAR and/or RADAR sensor.

4. The system as defined in any one of the preceding claims, the control device being further configured to control the tightening tool to perform tightening operations at a plurality of processing points on the work piece.

5. The system as defined in claim 4, further comprising a position determining device configured to determine a position of the tightening tool relative to the plurality of processing points.

6. The system as define in claim 4 or 5, wherein each one of the processing points is associated with a specific predetermined distance range, within which the tightening tool is enabled by the control device to perform a tightening operation.

7. The system as defined in any one of the preceding claims, wherein the distance measuring device is arranged to sense a distance to a portion (13, 13a, 13b) of the surface in front of the tightening tool, which portion, when the tightening tool is held in a starting position for performing a tightening operation at a processing point on the work piece, is located in the vicinity of a processing point, such as within 50 mm from the processing point, such as within 30 mm from the processing point.

8. The system as defined in any one of the preceding claims, wherein the distance measuring device comprises several sensors (3b, 3c) arranged around a circumference of a tool head (9) of the tightening tool.

9. The system as defined in any one of the preceding claims, further comprising an orientation sensing device (5) arranged to sense an orientation of the tool, wherein data from the orientation sensing device is used as a further basis by the control device for determining whether to enable the tightening tool to perform a tightening operation.
